(19) Europäisches Patentamt / European Patent Office / Office européen des brevets

(11) **EP 2 991 413 A1**

(12) **EUROPEAN PATENT APPLICATION**
published in accordance with Art. 153(4) EPC

(43) Date of publication:
**02.03.2016 Bulletin 2016/09**

(51) Int Cl.:
**H04W 52/14** (2009.01)    **H04W 52/24** (2009.01)

(21) Application number: **13882986.6**

(86) International application number:
**PCT/CN2013/074814**

(22) Date of filing: **26.04.2013**

(87) International publication number:
**WO 2014/172897 (30.10.2014 Gazette 2014/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**92100 Boulogne-Billancourt (FR)**

(72) Inventors:
• **LIU, Jianguo**
 **Shanghai 201206 (CN)**
• **LIU, Jin**
 **Shanghai 201206 (CN)**
• **WANG, Dongyao**
 **Shanghai 201206 (CN)**

(74) Representative: **2SPL Patentanwälte PartG mbB**
**Postfach 15 17 23**
**80050 München (DE)**

(54) **METHOD AND APPARATUS FOR UPLINK FRACTIONAL POWER CONTROL BASED ON INTERFERENCE**

(57)    The present invention provides a method and apparatus for interference-based uplink fractional power control. The method comprises: sending to a UE served by the serving base station a measurement configuration message for instructing the UE to measure Reference Signal Received Powers (RSRPs) of the serving base station and neighboring base stations; receiving from the neighboring base stations downlink transmit powers and desired IoT operating points of the neighboring base stations; receiving RSRP values of the serving base station and the neighboring base stations measured by the UE; estimating path losses between the serving base station and the neighboring base stations and the UE based on the downlink transmit powers and the RSRP values of the serving base station and the neighboring base stations, and selecting a neighboring base station with the smallest path loss as the strongest neighboring base station; determining an interference of the UE to the strongest neighboring base station based on the estimated path losses and a serving cell specific transmit power for uplink transmission of the UE; and determining a UE specific transmit power offset for the uplink transmission of the UE based on the determined interference and the desired IoT operating point of the strongest neighboring base station.

200

Fig. 2

**Description**

**Field of the Invention**

The present invention generally relates to a wireless communication field, and more specifically to a method and apparatus for interference-based uplink fractional power control.

**Background of the Invention**

In a wireless communication system, power control is an important mechanism for transmission quality control with purpose to overcome a problem of communication performance degradation caused by radio channel fading and interference. According to different objects on which the power control is performed, the power control is categorized into Downlink (DL) power control (that is, to control the transmit power of a base station) and Uplink (UL) power control (that is, to control the transmit power of a User Equipment (UE)). In the 3rd Generation Partnership Project (3GPP) Long Term Evolution (LTE), Fractional Power Control (FPC) has been approved for uplink power control as it provides an effective mechanism to control the interferences caused by a UE to neighboring cells (see reference document [1]). The baseline FPC for data transmission on the Physical Uplink Shared Channel (PUSCH) is slow, open-loop power control. The serving base station half statically configures for all of its served UEs a cell specific transmit power parameter $P_{O\_CELL\_PUSCH}$, which is expressed in dBm and can be expressed by the following formula (1) (see reference document [2]):

$$P_{O\_CELL\_PUSCH} = SINR_{nominal} + (1 + \alpha)PL_{nominal} + IoT + N_0, \qquad (1)$$

where $SINR_{nominal}$ and $PL_{nominal}$ respectively denote the nominal Signal to Interference plus Noise Ratio (SINR) and the nominal path loss; $0 \leq \alpha \leq 1$ is a fractional path loss compensation factor for fractional compensation of path loss; $IoT$ is a desired Interference over Thermal Noise (IoT) operating point; and $N_0$ is a thermal noise level per Physical Resource Block (PRB).

In addition, each UE has a UE specific transmit power offset $P_{O\_UE\_PUSCH}$, which is delivered to respective UEs through dedicated Radio Resource Control (RRC) signaling.

Thus, the transmit power per PRB of the UE may be set as:

$$P = P_{O\_PUSCH} + \alpha \times PL, \qquad (2)$$

where $P_{O\_PUSCH} = P_{O\_CELL\_PUSCH} + P_{O\_UE\_PUSCH}$, $PL$ is a long-term path loss of a user to its serving cell.

In this case, the target SINR achieved by the UE may be represented as:

$$SINR_{target} = SINR_{nominal} - (1 - \alpha) \times (PL - PL_{nominal}). \qquad (3)$$

It can be seen that the performance of FPC relies on the assumption that the interference generated towards other cells is mostly due to users at the cell edge. Since $\alpha \leq 1$, the target SINR always decreases with increase of path loss. However, the distribution of interferences to neighboring cells is not completely consistent with that of the UE's path loss to the serving cell. Especially for heterogenous cellular networks, there is less dependency between the path loss to the serving cell and the interferences to the neighboring cells.

For homogenous cellular networks, with the FPC scheme defined in the reference document [1], the small difference of path loss between adjacent sectors at cell center in combination with high target SINR leads to high inter-sector interference.

For heterogenous cellular networks, if a downlink based user access method is employed, a small cell generally has a relatively small coverage area in comparison with a macro cell due to the difference of transmit powers between a small cell base station and a macro cell base station. Due to the DL/UL user access imbalance and overlapped deployment between the small cell and the macro cell, strong interference will be generated to the small cell base station if the macro cell UE adjacent to the small cell base station has a high target SINR.

This shows that the assumption that the UE with lowest path loss generates most of the interferences is not always true, especially in the heterogenous deployment layout or the three-sector cell layout with correlated shadow fading. Another essential issue is that the nonuniform user dropping or irregular deployment of small cells would cause interference imbalance between cells, and thus leads to IoT level fluctuation among cells when the uplink power control doesn't consider the interferences to neighboring cells and interference status of neighboring cells.

In addition, for heterogenous network deployment, the Channel Quality Information (CQI) based FPC scheme is proposed to solve inter-sector interference issue in 3GPP LR13.1. The CQI based FPC scheme is an enhancement to the conventional path loss based FPC scheme. Its advantage enables to detect when UE is getting close to a neighbor cell based on the CQI information reported by the UE, rather than merely considering the value of the path loss, so as to reduce inter-sector interference issues. Such a CQI based FPC scheme is particularly useful in near cell scenarios where the UE is set with a high target SINR by the path loss based FPC algorithm and any deviation from the main orientation of the sector may lead to a substantially high interference to the adjacent sectors.

However, this scheme depends on the CQI feedback from the UE side, while for UEs from different manufacturers, there may be notable variability in the CQI measurement reports for the same radio frequency condition. Furthermore, this scheme depends on the assumption that the transmit power of each base station is identical so as to control the interference level to neighboring cells. Thus, in heterogenous network (HetNet), this scheme will fail to differentiate, by the DL SINR, whether the interferences of a UE to neighboring cells are caused due to the difference of transmit powers between a macro cell and a small cell. Furthermore, this scheme does not have the interference knowledge of neighboring cells, therefore it is difficult for the neighboring cells to achieve the desired IoT operating point due to no cooperation from neighboring cells in the case of the nonuniform user dropping or irregular deployment of small cells.

So, it is suggested that when the uplink power control is to be performed, the transmit power of the UE should be adjusted by taking into account the interferences generated to the neighboring cells in addition to the path loss so as to develop an effective dependency between the interferences of the UE to neighboring cells and the target SINR for inter-cell/sector interference coordination.

Reference Documents:

[1] 3GPP TS36.213, "E-UTRA-Physical layer procedures (Release 11)".
[2] Nageen Himayat, Shilpa Talwar, Anil Rao and Robert Soni, "Interference Management for 4G Cellular Standards," IEEE Communications Magazine, vol.48, Aug. 2010.

**Summary of the Invention**

In view of the above problem, the present invention provides a solution of uplink fractional power control implemented based on interferences to neighboring cells, and the solution is adapted to both the homogenous network deployment and the heterogenous network deployment.

According to one aspect of the present invention, there is provided a method for interference-based uplink fractional power control implemented by a serving base station, comprising: sending to a UE served by the serving base station a measurement configuration message for instructing the UE to measure Reference Signal Received Powers (RSRPs) of the serving base station and neighboring base stations; receiving from the neighboring base stations downlink transmit powers and desired Interference over Thermal Noise (IoT) operating points of the neighboring base stations; receiving RSRP values of the serving base station and the neighboring base stations measured by the UE; estimating path losses between the serving base station and the neighboring base stations and the UE based on the downlink transmit powers and the RSRP values of the serving base station and the neighboring base stations, and selecting a neighboring base station with the smallest path loss as the strongest neighboring base station; determining an interference of the UE to the strongest neighboring base station based on the estimated path losses and a serving cell specific transmit power for uplink transmission of the UE; and determining a UE specific transmit power offset for the uplink transmission of the UE based on the determined interference and the desired IoT operating point of the strongest neighboring base station.

According to another aspect of the present invention, there is provided an apparatus for interference-based uplink fractional power control implemented by a serving base station, comprising: a sending unit configured to send to a UE served by the serving base station a measurement configuration message for instructing the UE to measure Reference Signal Received Powers (RSRPs) of the serving base station and neighboring base stations; a receiving unit configured to receive from the neighboring base stations downlink transmit powers and desired Interference over Thermal Noise (IoT) operating points of the neighboring base stations, and configured to receive RSRP values of the serving base station and the neighboring base stations measured by the UE; a path loss estimating unit configured to estimate path losses between the serving base station and the neighboring base stations and the UE based on the downlink transmit powers and the RSRP values of the serving base station and the neighboring base stations, and to select a neighboring base station with the smallest path loss as the strongest neighboring base station; an interference determining unit configured to determine an interference of the UE to the strongest neighboring base station based on the estimated path losses and a serving cell specific transmit power for uplink transmission of the UE; and a transmit power determining unit configured to determine a UE specific transmit power offset for the uplink transmission of the UE based on the determined interference and the desired IoT operating point of the strongest neighboring base station.

According to another aspect of the present invention, there is provided a method for interference-based uplink fractional power control implemented by a UE, comprising: receiving from a serving base station of the UE a measurement configuration message for instructing the UE to measure Reference Signal Received Powers (RSRPs) of the serving base station and neighboring base stations; measuring the RSRPs of the serving base station and the neighboring base stations in response to receipt of the measurement configuration message; sending the measured RSRP values to the serving base station; receiving from the serving base station a serving cell specific transmit power and a UE specific transmit power offset for uplink transmission of the UE, wherein the UE specific transmit power offset is determined by the serving base station based on path losses between the serving base station and the neighboring base stations and the UE and a desired Interference over Thermal Noise (IoT) operating point; and determining a transmit power of the UE based on the received serving cell specific transmit power and the received UE specific transmit power offset.

According to another aspect of the present invention, there is provided an apparatus for interference-based uplink fractional power control implemented by a UE, comprising: a receiving unit configured to receive from a serving base station of the UE a measurement configuration message for instructing the UE to measure Reference Signal Received Powers (RSRPs) of the serving base station and neighboring base stations; a measuring unit configured to measure the RSRPs of the serving base station and the neighboring base stations in response to receipt of the measurement configuration message; a sending unit configured to send the measured RSRP values to the serving base station; the receiving unit further configured to receive from the serving base station a serving cell specific transmit power and a UE specific transmit power offset for uplink transmission of the UE, wherein the UE specific transmit power offset is determined by the serving base station based on path losses between the serving base station and the neighboring base stations and the UE and a desired Interference over Thermal Noise (IoT) operating point; and a transmit power determining unit configured to determine a transmit power of the UE based on the received serving cell specific transmit power and the received UE specific transmit power offset.

With the solution of the present invention, there is provided an efficient interference-based FPC solution for inter-cell/sector interference coordination, and the solution is adapted to both the homogenous network deployment and the heterogenous network deployment, thereby solving the inter-sector interference problem in homogenous network and the interference imbalance problem in heterogenous network.

## Brief Description of the Drawings

The present invention will be understood better by the following description of the embodiments of the present invention in conjunction with the accompanying drawings, and other objects, details, features and advantages of the present invention will become more apparent. In the drawings:

FIG. 1 illustrates a schematic diagram of a wireless communication network according to embodiments of the present invention;

FIG. 2 illustrates a signaling diagram of a method for interference-based uplink fractional power control according to embodiments of the present invention;

FIG. 3 illustrates a schematic diagram of an apparatus for interference-based uplink fractional power control according to embodiments of the present invention;

FIG. 4 illustrates a schematic diagram of an apparatus for interference-based uplink fractional power control according to embodiments of the present invention; and

FIG. 5 and FIG. 6 respectively illustrate a comparison chart of simulation result between the solution according to embodiments of the present invention and the current baseline FPC solution, in the homogenous network and the heterogenous network respectively.

Here, in all figures, same or similar signs indicate same, similar or corresponding features or functions.

## Detailed Description of Embodiments

Preferred embodiments of the present invention will now be described in more details in conjunction with accompanying figures. Although preferred embodiments of the present invention are shown in the accompanying figures, it should be understood that the present disclosure can be embodied in various ways without being limited to the embodiments depicted herein. In contrast, the embodiments are provided herein to make the disclosure more throughout and complete and convey the scope of the present disclosure to those skilled in this art.

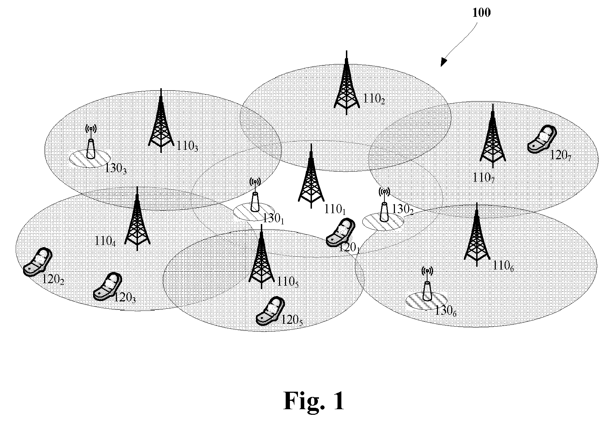

FIG. 1 illustrates a schematic diagram of a wireless communication network 100 according to embodiments of the present invention. As illustrated in FIG. 1, the wireless communication network 100 comprises one or more macro base stations 110 (e.g. macro base stations $110_1$, $110_2$ ... $110_7$) and one or more UEs 120 (e.g. UE $120_1$, $120_2$, $120_3$, $120_5$ and $120_7$) distributed throughout the wireless communication network 100, wherein each macro base station 110 provides service to UEs in its coverage area, which is also called a serving base station. In addition, according to one embodiment, the wireless communication network 100 further comprises one or more small cell base stations 130 (e.g. small cell base stations $130_1$, $130_2$, $130_3$ and $130_6$) that provide relatively small coverage areas (indicated by slashes in the figure) compared with the macro base station 110. Although FIG. 1 illustrates a heterogenous network deployment including both macro base stations and small cell base stations as an example of the wireless communication network 100, those skilled in the art may understand, by reading the description of the present specification, that the conception of the present invention may also be applied to the homogenous network deployment.

In the present disclosure, according to the context where the term is used, the term "cell" may refer to a coverage area of a base station and/or a base station or a base station subsystem serving the coverage area. In the present disclosure, according to the context, the term "cell" may be used interchangeably with "base station," "eNB," etc.. In addition, based on different communication systems involved, the "cell" may further refer to a sector, etc..

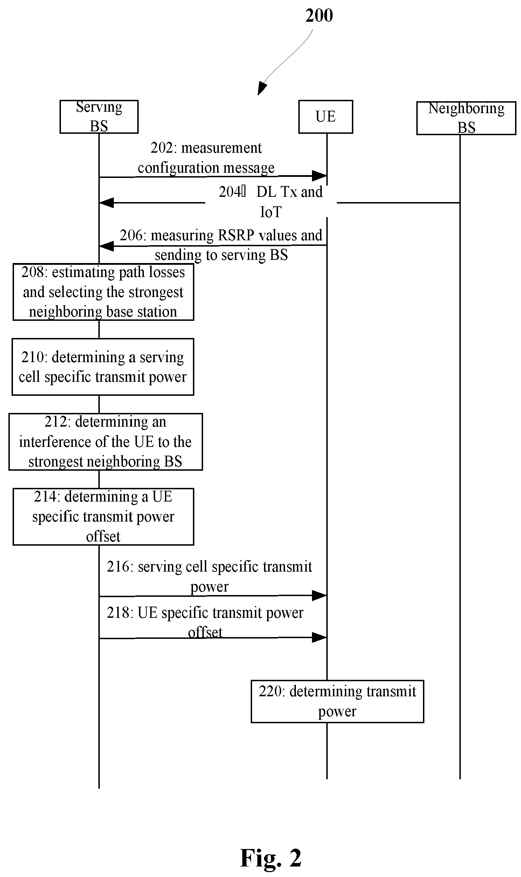

FIG. 2 illustrates a signaling diagram of a method 200 for interference-based uplink fractional power control according to embodiments of the present invention. In the embodiment as illustrated in FIG. 2, the UE $120_1$ (hereinafter called UE or target UE) in FIG. 1 is taken as an example to describe a process of uplink fractional power control on it. In this case, the macro base station $110_1$ is the serving base station (hereinafter called the serving base station) of the target UE $120_1$, and a list of its neighboring base bastions is stored in the serving base station. Making references to the schematic diagram of the wireless communication network 100 in FIG. 1, it can be seen that the macro base stations $110_2$ ... $110_7$ and the small cell base stations $130_1$ and $130_2$ are all neighboring base stations (hereinafter generally called neighboring base stations) of the serving base station $110_1$, and their list is stored in the serving base station.

As illustrated in FIG. 2, the method 200 starts at Step 202. In Step 202, the serving base station sends a measurement configuration message to the UE. The measurement configuration message is used to instruct the UE to measure RSRPs of the serving base station and the neighboring base stations.

In one embodiment, the measurement configuration message includes a list of neighboring base stations whose RSRPs need to be measured. It can be understood that the neighboring base stations whose RSRPs need to be measured may be all or only part of the neighboring base stations of the serving base station.

In one embodiment, the measurement configuration message is sent via RRC signaling.

In one embodiment, the measurement configuration message instructs UE to periodically measure RSRP values of the serving base station and the neighboring base stations.

Next, in Step 204, the serving base station receives from the neighboring base stations information about respective downlink transmit powers and desired IoT operating points for uplink. The downlink transmit powers are used to calculate path losses of respective neighboring base stations, and the desired IoT operating points for uplink are used for inter-cell/sector interference control.

In one embodiment, the above information is sent via X2 interfaces between the serving base station and the neighboring base stations.

Based on the received measurement configuration message, UE measures RSRPs of the serving base station and the neighboring base stations, and sends the measured RSRP values to the serving base station (Step 206).

In one embodiment, UE may measure the RSRPs by using Cell-specific Reference Signals (CRS). In another embodiment, UE may measure the RSRPs by using Channel State Information (CSI) Reference Signals (CSI-RS).

In one embodiment, UE sends the measured RSRP values to the serving base station via RRC signaling.

Those skilled in the art may understand that the execution order of Steps 204 and 206 as illustrated in FIG. 2 is merely illustrative, and the present invention is not limited to the specific order as illustrated in FIG. 2. In fact, Step 204 may be executed before Step 206, after Step 206, or in parallel with Step 206. These all fall into the protection scope of the present invention.

Next, in Step 208, the serving base station estimates path losses between the serving base station and each neighboring base station and the UE based on the downlink transmit powers and the received RSRP values of the serving base station per se and the neighboring base stations, and selects a neighboring base station with the smallest path loss as the strongest neighboring base station.

For example, it is assumed that the downlink transmit power of the serving base station is $Tx^{serving}$; the downlink transmit power of the $n^{th}$ (where n=1 ... N, N is the total number of the neighboring base stations whose RSRPs need to be measured) neighboring base station whose RSRPs need to be measured by the UE is $Tx_n^{neighbor}$; the RSRP value of the serving base station measured by the UE is $RSRP^{serving}$; the RSRP value of the n$^{th}$ neighboring base station measured by the UE is $RSRP_n^{neighbor}$, then the serving base station may estimate the path losses $PL^{serving}$ and $PL_n^{neighbor}$ between the serving base station and each neighboring base station and the UE according to the formula (4) below:

$$PL_n^{neighbor} = RSRP_n^{neighbor} - Tx_n^{neighbor}$$
$$PL^{serving} = RSRP^{serving} - Tx^{serving} \qquad . \qquad (4)$$

The serving base station then selects the neighboring base station with the smallest path loss as the strongest neighboring base station, and the strongest neighboring base station may be denoted as:

$$c = \min_{n \in \{1, \cdots, N\}} \left\{ PL_n^{neighbor} \right\}, \qquad (5)$$

where c is the number of the strongest neighboring base station. For simplicity, the path loss between the strongest neighboring base station and the UE is also denoted as $PL^{neighbor}$, that is, $PL^{neighbor} = PL_c^{neighbor}$.

In Step 210, the serving base station determines a serving cell specific transmit power for uplink transmission of the UE. For example, similar to the above formula (1), the serving cell specific transmit power $P_{O\_CELL\_PUSCH}$ may be determined according to the following formula (6):

$$P_{O\_CELL\_PUSCH} = SINR_{nominal} + (1+\alpha)PL_{nominal} + IoT + N_0, \qquad (6)$$

where $SINR_{nominal}$ and $PL_{nominal}$ respectively denote nominal SINR and nominal path loss; $0 \le \alpha \le 1$ is a fractional path loss compensation factor; $IoT$ is the desired IoT operating point. These parameters are preset by the serving base station based on requirements of path loss compensation. In addition, $N_0$ indicates the thermal noise level per PRB.

FIG. 2 only exemplarily illustrates Step 210 following Step 208. However, those skilled in the art may understand that Step 210 may be executed at any time between Step 202 to Step 208, or the method 200 may omit Step 210 completely. For example, the serving base station may preset, on power-on or periodically, a serving cell specific transmit power for uplink transmission of its served UE.

Next, in Step 212, the serving base station determines an interference of the UE to the strongest neighboring base station based on the serving cell specific transmit power $P_{O\_CELL\_PUSCH}$ and the path loss $PL^{serving}$ between the serving base station and the UE and the path loss $PL^{neighbor}$ between the strongest neighboring base station and the UE as determined in Step 208. For example, the interference may be denoted as:

$$I = P_{O\_CELL\_PUSCH} + \alpha \times PL^{serving} - PL^{neighbor}, \qquad (7)$$

where $I$ is the interference level of the UE to the strongest neighboring base station in a given IoT operating point.

Next, in Step 214, the serving base station determines a UE specific transmit power offset for the uplink transmission of the UE based on the interference level determined in Step 212 and the desired IoT operating point of the strongest neighboring base station for the UE. For example, the UE specific transmit power offset $P_{O\_UE\_PUSCH}$ may be denoted as:

$$P_{O\_UE\_PUSCH} = \beta \times \left( f\left(IoT^{neighbor}\right) - I \right), \qquad (8)$$

where $\beta(0 \le \beta \le 1)$ is a factor to achieve a tradeoff between sector throughput and cell edge bitrate, which is preset by the serving base station based on the requirement for adjustment of uplink transmit power; $f(\text{IoT}^{\text{neighbor}})$ is a function of the desired IoT operating point $\text{IoT}^{\text{neighbor}}$ of the strongest neighboring base station to the UE considering the desired total interference level. For example, in one example, $f(\text{IoT}^{\text{neighbor}})$ may be defined as

$$f\left(\text{IoT}^{\text{neighbor}}\right) = 10 \times \log_{10}\left(10^{\left(\text{IoT}^{\text{neighbor}} - N_0\right)/10} - 10^{N_0/10}\right). \qquad (9)$$

For the LTE system, since it is an interference limited system, $f(\text{IoT}^{\text{neighbor}})$ may be rewritten as:

$$f\left(\text{IoT}_{\text{i}}^{\text{neighbor}}\right) = \text{IoT}_{\text{i}}^{\text{neighbor}} - N_0. \qquad (10)$$

Next, the serving base station sends the determined serving cell specific transmit power $P_{\text{O\_CELL\_PUSCH}}$ and the UE specific transmit power offset $P_{\text{O\_UE\_PUSCH}}$ to the UE, respectively (Steps 216 and 218).

In one embodiment, the serving cell specific transmit power $P_{\text{O\_CELL\_PUSCH}}$ is sent to the UE via a Broadcast Channel (BCH). In addition, the serving base station may also send the fractional path loss compensation factor $\alpha$ to the UE via BCH. However, those skilled in the art may understand that the fractional path loss compensation factor $\alpha$ may be notified by the serving base station to the UE in any way or may be obtained by the UE from the serving base station when the UE initially accesses to the serving base station.

In one embodiment, the UE specific transmit power offset $P_{\text{O\_UE\_PUSCH}}$ is sent to the UE via RRC signaling.

Next, in Step 220, the UE determines its transmit power based on the received serving cell specific transmit power $P_{\text{O\_CELL\_PUSCH}}$ and the UE specific transmit power offset $P_{\text{O\_UE\_PUSCH}}$. For example, the UE may determine its transmit power per PRB as:

$$P = P_{\text{O\_CELL\_PUSCH}} + P_{\text{O\_UE\_PUSCH}} + \alpha \times PL^{serving}. \qquad (11)$$

In this case, the target SINR of the UE can be rewritten as:

$$SINR_{target} = P_{\text{O\_UE\_PUSCH}} + SINR_{nominal} - (1-\alpha) \times \left(PL^{serving} - PL_{nominal}\right). \qquad (12)$$

It can be seen from above that, in addition to the path loss, the solution of the present invention further considers the interferences generated to the neighboring base stations to differentially treat different UEs such that UEs with high interferences to the neighboring base stations are set with low target SINRs, vice versa.

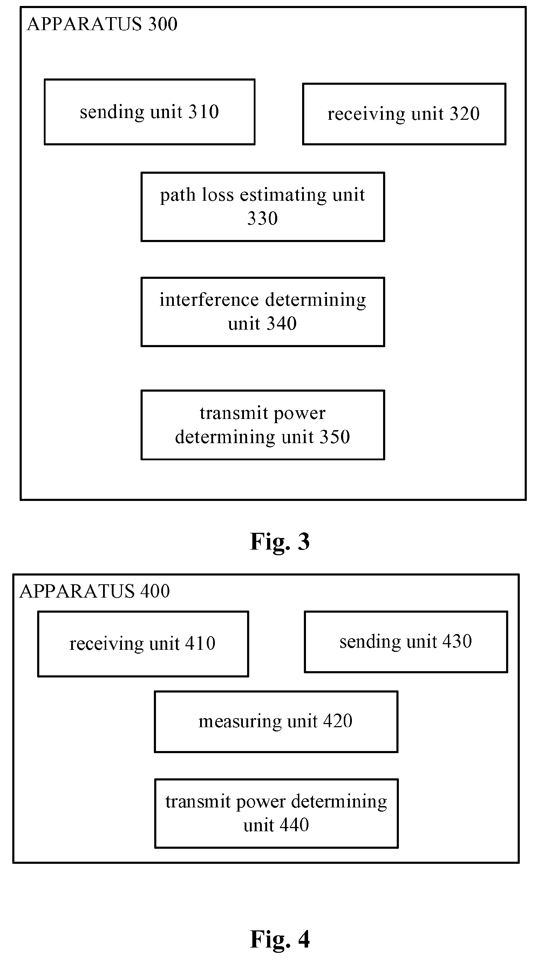

FIG. 3 illustrates a schematic diagram of an apparatus 300 for interference-based uplink fractional power control according to embodiments of the present invention. The apparatus 300, for example, may be or may be implemented in the serving base station $110_1$ in the embodiments described in connection with FIG. 1 to FIG. 2.

As illustrated in FIG. 3, the apparatus 300 comprises a sending unit 310 configured to send to a UE a measurement configuration message for instructing the UE to measure RSRPs of the serving base station and the neighboring base stations.

In one embodiment, the measurement configuration message includes a list of neighboring base stations whose RSRPs need to be measured. It can be understood that the neighboring base stations whose RSRPs need to be measured may be all or part of the neighboring base stations of the serving base station.

In one embodiment, the measurement configuration message is sent via RRC signaling.

In one embodiment, the measurement configuration message instructs the UE to periodically measure RSRP values of the serving base station and the neighboring base stations.

The apparatus 300 further comprises a receiving unit 320 configured to receive from the neighboring base stations information about respective downlink transmit powers and desired IoT operating points for uplink, wherein the downlink transmit powers are used to calculate path losses of respective neighboring base stations, and the desired IoT operating points for uplink are used for inter-cell/sector interference control.

In one embodiment, the above information is sent via X2 interfaces between the serving base station and the neighboring base stations.

The receiving unit 320 is further configured to receive RSRP values of the serving base station and the neighboring base stations measured by the UE.

The apparatus 300 further comprises a path loss estimating unit 330 configured to estimate path losses between the serving base station and each neighboring base station and the UE based on the downlink transmit powers and the RSRP values of the serving base station and the neighboring base stations, and to select a neighboring base station with the smallest path loss as the strongest neighboring base station.

For example, the path loss estimating unit 330 may estimate the path losses and select the strongest neighboring base station using the above formulas (4) and (5).

The apparatus 300 further comprises an interference determining unit 340 configured to determine an interference of the UE to the strongest neighboring base station based on the estimated path losses and a serving cell specific transmit power for uplink transmission of the UE.

For example, the interference determining unit 340 may determine the interference level of the UE to the strongest neighboring base station using the above formula (7).

The apparatus 300 further comprises a transmit power determining unit 350 configured to determine a UE specific transmit power offset for the uplink transmission of the UE based on the determined interference to the strongest neighboring base station and the desired IoT operating point of the strongest neighboring base station.

For example, the transmit power determining unit 350 may determine the UE specific transmit power offset using the above formulas (8)-(10).

In one embodiment, the transmit power determining unit 350 is further configured to determine the serving cell specific transmit power based on a nominal SINR, a nominal path loss, a fractional path loss compensation factor and a desired IoT operating point.

In one embodiment, the sending unit 310 is further configured to send the UE specific transmit power offset and the serving cell specific transmit power to the UE so that the UE can determine its uplink transmit power.

In one embodiment, the sending unit 310 is further configured to broadcast the serving cell specific transmit power to the UE via a Broadcast Channel (BCH), and to send the UE specific transmit power offset to the UE via RRC signaling.

FIG. 4 illustrates a schematic diagram of an apparatus 400 for interference-based uplink fractional power control according to embodiments of the present invention. The apparatus 400, for example, may be or may be implemented in the UE $120_1$ in the embodiments described in connection with FIG. 1 to FIG. 2.

As illustrated in FIG. 4, the apparatus 400 comprises a receiving unit 410 configured to receive from a serving base station a measurement configuration message for instructing the UE to measure RSRPs of the serving base station and neighboring base stations.

In one embodiment, the measurement configuration message includes a list of neighboring base stations whose RSRPs need to be measured. It can be understood that the neighboring base stations whose RSRPs need to be measured may be all or part of the neighboring base stations of the serving base station.

In one embodiment, the measurement configuration message is received via RRC signaling.

In one embodiment, the measurement configuration message instructs the UE to periodically measure RSRP values of the serving base station and the neighboring base stations.

The apparatus 400 further comprises a measuring unit 420 configured to measure the RSRPs of the serving base station and the neighboring base stations in response to receipt of the measurement configuration message.

In one embodiment, the measuring unit 420 may measure the RSRPs by using Cell-specific Reference Signals (CRS). In another embodiment, the measuring unit 420 may measure the RSRPs by using Channel State Information (CSI) Reference Signals (CSI-RS).

The apparatus 400 further comprises a sending unit 430 configured to send the measured RSRP values to the serving base station.

In one embodiment, the sending unit 430 sends the measured RSRP values to the serving base station via RRC signaling.

The receiving unit 410 is further configured to receive from the serving base station a serving cell specific transmit power and a UE specific transmit power offset for uplink transmission of the UE, wherein the UE specific transmit power offset is determined by the serving base station based on path losses between the serving base station and the neighboring base stations and the UE and the desired IoT operating point, as described above with reference to FIG. 2.

In one embodiment, the receiving unit 410 receives the serving cell specific transmit power via a Broadcast Channel (BCH). In addition, the receiving unit 410 may also receive the fractional path loss compensation factor $\alpha$ via the BCH.

In one embodiment, the receiving unit 410 receives the UE specific transmit power offset via RRC signaling.

The apparatus 400 further comprises a transmit power determining unit 440 configured to determine a transmit power of the UE based on the received serving cell specific transmit power and the received UE specific transmit power offset.

For example, the transmit power determining unit 440 may determine the transmit power by using the above formula (11).

It can be seen that the solution of the present invention adjusts the transmit power of the UE by considering the interferences of the UE to the neighboring base stations and the interferences of the neighboring base stations to the UE, and develops an effective dependency between the interferences of the UE to the neighboring base stations and the transmit power of the UE, thereby providing an efficient interference-based FPC solution for inter-cell/sector interference coordination. The solution is adapted to both the homogenous network deployment and the heterogenous network deployment, thereby solving the inter-sector interference problem in homogenous network and the interference imbalance problem in heterogenous network.

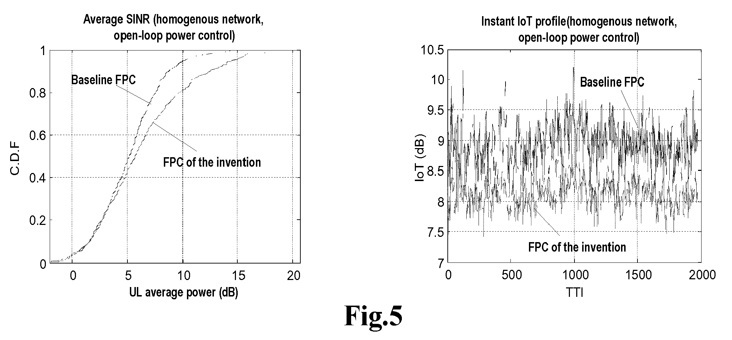

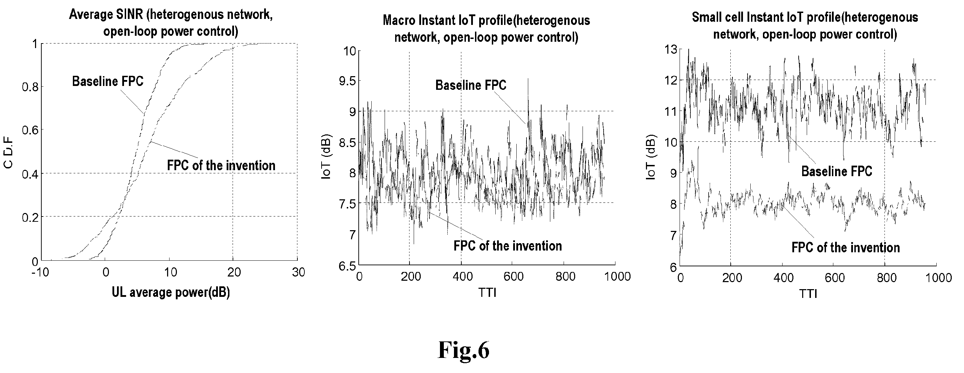

FIG. 5 and FIG. 6 respectively illustrate a comparison chart of simulation result between the FPC solution according to embodiments of the present invention and the current baseline FPC solution, in the homogenous network and the heterogenous network respectively.

The simulation assumptions are outlined in Table 1.

**Table 1: Simulation Assumptions**

| Parameter | Value |
|---|---|
| Duplex method | FDD |
| Network synchronization | Synchronized |
| Handover margin | 1dB |
| Uplink transmission scheme | 1x2 SIMO |
| Uplink scheduling scheme | Round Robin |
| Uplink adaptation scheme | Based on delayed measurements. Ideal channel estimate from UL transmission in sub-frame n can be used for rate adaptation in sub-frame n+7 MCSs based on LTE transport formats |
| Uplink HARQ | Synchronous HARQ Maximum four transmissions Proponent to Chase Combine |
| Uplink receiver type | MMSE in frequency domain, MRC over antennas (no inter-cell interference rejection) |
| Macro cell layout | Hexagonal grid, 7 macro eNB cell sites, 3 cells per site, wrap-around layout |
| Small cell layout | 0 or 2 small cells per sector, not wrap-around layout |
| UE number | 25 UEs per sector |
| Inter-site distance (ISD) | 500 m (3GPP case 1) |
| Maximum Tx power | UE : 23dBm |
| Carrier freq/Band width | 2G, 10MHz |
| Scheduling granularity | 5 PRBs |
| Macro eNB and pico eNB antenna configuration | 2 Rx antenna with antenna pattern defined in 3GPP TS 36.814 |
| UE antenna configuration | 1 Tx antennas (0 dBi antenna gain, omni-directional) |
| Channel estimation | Ideal |
| BS antenna down tilt | Case 1 3GPP 2D: N/A |
| Feeder loss | 0dB |
| Channel model | SCM urban macro high spread for 3GPP case 1 |
| Path loss model | As in 3GPP TS 36.814 |
| Inter-cell interference modeling | Explicitly |

(continued)

| Parameter | Value |
|---|---|
| Traffic model | Full buffer |
| Uplink power control | Nominal SINR = 10 dB, Nominal pathloss for homogenous network = 90 dB, Nominal pathloss for HetNet = 85, $\alpha$ = 1, the desired IoT operating point for all cells = 8dB, $\beta$=0.5 for Interference-based FPC solution of the present invention |

Performance analysis in homogenous network is outlined in Table 2 below.

Table 2: Performance Analysis in Homogenous Network

| | IoT(dB) | Throughput(bps/Hz/User) | | | |
|---|---|---|---|---|---|
| | | 5% | 50% | mean | 95% |
| Baseline FPC Solution | 8.9337 | 0.0229 | 0.0404 | 0.0421 | 0.0669 |
| FPC Solution of Present Invention | 8.1178 | 0.0231 | 0.0420 | 0.0478 | 0.0898 |

It can be seen from FIG. 5 and Table 2 that in case of the homogenous network, the FPC solution of the present invention can achieve a steadier and lower IoT level than the baseline FPC solution, and thus the solution of the present invention can effectively adjust the transmit power of each UE by jointly considering the actual interferences to neighboring cells and the interference status of the neighboring cells.

Performance analysis in heterogenous network is outlined in Table 3 below.

Tab 3: Performance Analysis in HetNet

| | IoT(dB) | | Throughput(bps/Hz/User) | | | |
|---|---|---|---|---|---|---|
| | Macro cell | Small cell | 5% | 50% | mean | 95% |
| Baseline FPC Solution | 8.1365 | 11.2086 | 0.0225 | 0.0454 | 0.1263 | 0.8299 |
| FPC Solution of Present Invention | 7.7447 | 8.0277 | 0.0183 | 0.0512 | 0.1811 | 1.3256 |

It can be seen from FIG. 6 and Table 3 that in case of the heterogenous network, the FPC solution proposed in this document effectively reduces the inter-cell interference of a macro cell UE to small cells and makes both the macro cell and the small cell work nearer to the IoT operating points. Furthermore, the proposed solution can greatly improve the overall average cell throughput in the cost of little cell-edge performance loss.

Here, the method as disclosed has been described with reference to the accompanying drawings. However, it should be appreciated that the sequence of the steps as illustrated in the figures and described in the description are only illustrative, and without departing from the scope of the claims, these method steps and/or actions may be executed in a different sequence, without being limited to the specific sequence as shown in the drawings and described in the description.

In one or more exemplary designs, the functions of the present application may be implemented using hardware, software, firmware, or any combinations thereof. In the case of implementation with software, the functions may be stored on a computer readable medium as one or more instructions or codes, or transmitted as one or more instructions or codes on the computer readable medium. The computer readable medium comprises a computer storage medium and a communication medium. The communication medium includes any medium that facilitates transmission of the computer program from one place to another. The storage medium may be any available medium accessible to a general or specific computer. The computer-readable medium may include, for example, but not limited to, RAM, ROM, EEPROM, CD-ROM or other optical disc storage devices, magnetic disk storage devices, or other magnetic storage devices, or any other medium that carries or stores desired program code means in a manner of instructions or data structures accessible by a general or specific computer or a general or specific processor. Furthermore, any connection may also be considered as a computer-readable medium. For example, if software is transmitted from a website, server or other remote source using a co-axial cable, an optical cable, a twisted pair wire, a digital subscriber line (DSL), or radio technologies such as infrared, radio or microwave, then the co-axial cable, optical cable, twisted pair wire, digital subscriber line (DSL), or radio technologies such as infrared, radio or microwave are also covered by the definition of medium.

The various illustrative logical blocks, modules, and circuits described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any normal processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

Those of skill would further appreciate that the various illustrative logical blocks, modules, circuits, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The above depiction of the present disclosure is to enable any of those skilled in the art to implement or use the present invention. For those skilled in the art, various modifications of the present disclosure are obvious, and the general principle defined herein may also be applied to other transformations without departing from the spirit and protection scope of the present invention. Thus, the present invention is not limited to the examples and designs as described herein, but should be consistent with the broadest scope of the principle and novel characteristics of the present disclosure.

**Claims**

1. A method for interference-based uplink fractional power control implemented by a serving base station, comprising:

sending to a User Equipment (UE) served by the serving base station a measurement configuration message for instructing the UE to measure Reference Signal Received Powers (RSRPs) of the serving base station and neighboring base stations;
receiving from the neighboring base stations downlink transmit powers and desired Interference over Thermal Noise (IoT) operating points of the neighboring base stations;
receiving RSRP values of the serving base station and the neighboring base stations measured by the UE;
estimating path losses between the serving base station and the neighboring base stations and the UE based on the downlink transmit powers and the RSRP values of the serving base station and the neighboring base stations, and selecting a neighboring base station with the smallest path loss as the strongest neighboring base station;
determining an interference of the UE to the strongest neighboring base station based on the estimated path losses and a serving cell specific transmit power for uplink transmission of the UE; and
determining a UE specific transmit power offset for the uplink transmission of the UE based on the determined interference and the desired IoT operating point of the strongest neighboring base station.

2. The method according to claim 1, further comprising:

determining the serving cell specific transmit power based on a nominal Signal to Interference plus Noise Ratio (SINR), a nominal path loss, a fractional path loss compensation factor and the desired IoT operating point.

3. The method according to claim 2, further comprising:

sending the UE specific transmit power offset and the serving cell specific transmit power to the UE so that the UE can determine its uplink transmit power.

4. The method according to claim 3, wherein the serving cell specific transmit power is broadcast to the UE via a Broadcast Channel (BCH), and the UE specific transmit power offset is sent to the UE via Radio Resource Control (RRC) signaling.

5. An apparatus for interference-based uplink fractional power control implemented by a serving base station, comprising:

a sending unit configured to send to a User Equipment (UE) served by the serving base station a measurement configuration message for instructing the UE to measure Reference Signal Received Powers (RSRPs) of the serving base station and neighboring base stations;

a receiving unit configured to receive from the neighboring base stations downlink transmit powers and desired Interference over Thermal Noise (IoT) operating points of the neighboring base stations, and configured to receive RSRP values of the serving base station and the neighboring base stations measured by the UE;

a path loss estimating unit configured to estimate path losses between the serving base station and the neighboring base stations and the UE based on the downlink transmit powers and the RSRP values of the serving base station and the neighboring base stations, and to select a neighboring base station with the smallest path loss as the strongest neighboring base station;

an interference determining unit configured to determine an interference of the UE to the strongest neighboring base station based on the estimated path losses and a serving cell specific transmit power for uplink transmission of the UE; and

a transmit power determining unit configured to determine a UE specific transmit power offset for the uplink transmission of the UE based on the determined interference and the desired IoT operating point of the strongest neighboring base station.

6. The apparatus according to claim 5, wherein the transmit power determining unit is further configured to determine the serving cell specific transmit power based on a nominal Signal to Interference plus Noise Ratio (SINR), a nominal path loss, a fractional path loss compensation factor and the desired IoT operating point.

7. The apparatus according to claim 6, wherein the sending unit is further configured to send the UE specific transmit power offset and the serving cell specific transmit power to the UE so that the UE can determine its uplink transmit power.

8. The apparatus according to claim 7, wherein the sending unit is further configured to broadcast the serving cell specific transmit power to the UE via a Broadcast Channel (BCH), and to send the UE specific transmit power offset to the UE via Radio Resource Control (RRC) signaling.

9. A method for interference-based uplink fractional power control implemented by a User Equipment (UE), comprising:

receiving from a serving base station of the UE a measurement configuration message for instructing the UE to measure Reference Signal Received Powers (RSRPs) of the serving base station and neighboring base stations;

measuring the RSRPs of the serving base station and the neighboring base stations in response to receipt of the measurement configuration message;

sending the measured RSRP values to the serving base station;

receiving from the serving base station a serving cell specific transmit power and a UE specific transmit power offset for uplink transmission of the UE, wherein the UE specific transmit power offset is determined by the serving base station based on path losses between the serving base station and the neighboring base stations and the UE and a desired Interference over Thermal Noise (IoT) operating point; and

determining a transmit power of the UE based on the received serving cell specific transmit power and the received UE specific transmit power offset.

10. An apparatus for interference-based uplink fractional power control implemented by a User Equipment (UE), comprising:

a receiving unit configured to receive from a serving base station of the UE a measurement configuration message for instructing the UE to measure Reference Signal Received Powers (RSRPs) of the serving base station and neighboring base stations;

a measuring unit configured to measure the RSRPs of the serving base station and the neighboring base stations in response to receipt of the measurement configuration message;

a sending unit configured to send the measured RSRP values to the serving base station;

the receiving unit further configured to receive from the serving base station a serving cell specific transmit power and a UE specific transmit power offset for uplink transmission of the UE, wherein the UE specific transmit power offset is determined by the serving base station based on path losses between the serving base station and the neighboring base stations and the UE and a desired Interference over Thermal Noise (IoT) operating point; and

a transmit power determining unit configured to determine a transmit power of the UE based on the received serving cell specific transmit power and the received UE specific transmit power offset.

**Fig. 1**

**200**

```
Serving              UE              Neighboring
BS                                   BS

   202: measurement
   configuration message

        204: DL Tx and
             IoT

   206: measuring RSRP values and
        sending to serving BS

┌────────────────────────┐
│ 208: estimating path   │
│ losses and selecting   │
│ the strongest          │
│ neighboring base       │
│ station                │
└────────────────────────┘

┌────────────────────────┐
│ 210: determining a     │
│ serving cell specific  │
│ transmit power         │
└────────────────────────┘

┌────────────────────────┐
│ 212: determining an    │
│ interference of the UE │
│ to the strongest       │
│ neighboring BS         │
└────────────────────────┘

┌────────────────────────┐
│ 214: determining a UE  │
│ specific transmit      │
│ power offset           │
└────────────────────────┘

   216: serving cell specific transmit
        power

   218: UE specific transmit power
        offset

                    ┌────────────────────────┐
                    │ 220: determining       │
                    │ transmit power         │
                    └────────────────────────┘
```

## Fig. 2

APPARATUS 300

sending unit 310

receiving unit 320

path loss estimating unit 330

interference determining unit 340

transmit power determining unit 350

**Fig. 3**

APPARATUS 400

receiving unit 410

sending unit 430

measuring unit 420

transmit power determining unit 440

**Fig. 4**

Fig.5

Fig.6

<div align="center">

## INTERNATIONAL SEARCH REPORT

</div>

| International application No. |
| --- |
| PCT/CN2013/074814 |

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: H04W; H04Q; H04L

Documentation searched other than minimum documentation to the extent that such documents are included in the fields searched

Electronic data base consulted during the international search (name of data base and, where practicable, search terms used)

CNABS, CNTXT, VEN, SIPOABS, 3GPP FTP, IEEE, CNKI: TCP, uplink, power, control, interference, adjacent, near, neighb+, offset, adjust+, compensat+, path loss, PL, FPC, strongest, most, least, reverse

**C. DOCUMENTS CONSIDERED TO BE RELEVANT**

| Category* | Citation of document, with indication, where appropriate, of the relevant passages | Relevant to claim No. |
| --- | --- | --- |
| X | CN 101741437 A (CHINA MOBILE COMMUNICATION CORP.) 16 June 2010 (16.06.2010) | 9, 10 |
| Y | Description, paragraphs [0003] to [0017], [0040], [0044], [0061] to [0067], [0075] to [0079], [0093] and figure 2 | 1-8 |
| Y | CN 101399579 A (UNIV BEIJING POSTS & TELECOM) 01 April 2009 (01.04.2009) description, page 3, line 23 to page 4, line 22 | 1-8 |
| Y | CN 102056218 A (ZTE CORP.) 11 May 2011 (11.05.2011) description, paragraphs [0043] to [0053] | 1-8 |
| Y | WO 2009078576 A1 (ELECTRONICS AND TELECOMMUNICATIONS RESEARCH INSTITUTE) 25 June 2009 (25.06.2009) description, paragraphs [0027] to [0039] | 1-8 |
| A | CN 101584129 A (LUCENT TECHNOLOGIES INC.) 18 November 2009 (18.11.2009) the whole document | 1-8 |

☐ Further documents are listed in the continuation of Box C. ☒ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 06 November 2013 (06.11.2013) | 13 February 2014 (13.02.2014) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>DU, Yongyan<br><br>Telephone No. (86-10) 62089451 |

Form PCT/ISA /210 (second sheet) (July 2009)

## INTERNATIONAL SEARCH REPORT
Information on patent family members

| International application No. |
|---|
| PCT/CN2013/074814 |

| Patent Documents referred in the Report | Publication Date | Patent Family | Publication Date |
|---|---|---|---|
| CN 101741437 A | 16.06.2010 | CN 101741437 B | 22.05.2013 |
| CN 101399579 A | 01.04.2009 | None | |
| CN 102056218 A | 11.05.2011 | WO 010145411 A1 | 23.12.2010 |
| WO 2009078576 A1 | 25.06.2009 | US 8504092 B2 | 06.08.2013 |
| | | US 2010291962 A1 | 18.11.2010 |
| | | KR 20090065167 A | 22.06.2009 |
| | | KR 100965300 B1 | 22.06.2010 |
| CN 101584129 A | 18.11.2009 | WO 2008085936 A3 | 12.09.2008 |
| | | US 7917164 B2 | 29.03.2011 |
| | | US 2008166976 A1 | 10.07.2008 |
| | | EP 2102996 A2 | 23.09.2009 |
| | | KR 20090107030 A | 12.10.2009 |
| | | JP 2010516184 A | 13.05.2010 |
| | | CN 101584129 B | 27.03.2013 |
| | | WO 2008085936 A2 | 17.07.2008 |
| | | IN 200903950 P4 | 24.07.2009 |
| | | KR 1162972 B1 | 09.07.2012 |
| | | JP 5281017 B2 | 04.09.2013 |
| | | EP 2102996 B1 | 27.11.2013 |

Form PCT/ISA /210 (patent family annex) (July 2009)

## INTERNATIONAL SEARCH REPORT

| International application No. |
| --- |
| PCT/CN2013/074814 |

Continuation of: A. CLASSIFICATION OF SUBJECT MATTER

H04W 52/14 (2009.01) i

H04W 52/24 (2009.01) i

Form PCT/ISA /210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NAGEEN HIMAYAT ; SHILPA TALWAR ; ANIL RAO ; ROBERT SONI.** Interference Management for 4G Cellular Standards. *IEEE Communications Magazine,* August 2010, vol. 48